# EUROPEAN PATENT SPECIFICATION

(11) **EP 0 907 489 B1**
(45) Date of publication and mention of the grant of the patent: **12.12.2001**
(21) Application number: 97923393.9
(22) Date of filing: 24.04.1997
(51) Int. Cl.: B29C 45/68, B29C 33/72, H01L 21/56, H01L 21/00

(54) **IMPROVEMENT IN INJECTION MOLDING APPARATUS**
VERBESSERUNG AN EINER SPRITZGIESSMASCHINE
PERFECTIONNEMENT APPORTE A UN APPAREIL DE MOULAGE PAR INJECTION

(30) Priority: 25.04.1996 SG 9609523; 28.09.1996 SG 9610761
(43) Date of publication of application: 14.04.1999
(73) Proprietor: Fastech System (S) Pte Ltd, Singapore 629908 (SG)
(72) Inventor: Berghoff, Hans Lothar, Singapore (SG)
(74) Representative: Barlow, Roy James
(86) International application number: PCT/SG97/00016
(87) International publication number: WO 97/39873

(56) References cited:
- US-A- 4 687 431
- US-A- 5 053 172

## Description

This invention relates to an injection moulding apparatus according to the precharacterising part of Claim 1. Apparatus of this type is used for example, for encapsulating integrated circuits.

The invention further relates to a method of closing and clamping a mould press.

In the electronics industry, a high degree of cleanliness is required to prevent contamination of circuitry and devices, which may cause subsequent electronic failure. Known injection moulding equipment employs hydraulic presses which may leak hydraulic fluids and cleaning techniques which are not always effective in removing debris from the moulds. Furthermore, removal of moulds for cleaning is often difficult and time consuming.

Documents US-A-4,687,431 and US-A-5,053,172 describe mould presses with mould cleaning devices included, which allow cleaning of the moulds without removal thereof. Document US-A-5,053,172 also describes closing a mould press and the preambles of the independent claims are based upon the disclosure of this document.

It is the object of the present invention to provide an improved apparatus and method for clamping moulds in a moulding apparatus.

According to one aspect of the present invention, there is provided an injection moulding apparatus comprising a moulding press adapted to receive a mould having a cavity shaped for the formation of a moulding product, the moulding apparatus comprising:
a frame; and
a first platen movable relative to a second platen so as to allow respective mould parts arranged therebetween to be moved between open and closed configurations;
characterised by further comprising:
a ball screw;
a motor coupled to drive the ball screw by way of a gear mechanism for moving the first platen relative to the second platen and said frame; and
a pneumatic cylinder for driving a lever arm to rotate a ball nut on said ball screw to apply a clamping force through said ball screw to said first platen.

Optional features of the apparatus of claim 1 are the subject of the dependent claims 2 to 6.

Preferably said ball screw is coupled to said first platen;
said motor is mounted on said first platen; and
said cylinder is on said frame.

This apparatus may additionally include a spring-loaded bearing system in said mould for easy removal of the mould from the platen.

The pneumatic cylinder is preferably arranged to apply torque to said lever arm and said ball nut so as to apply said clamping force between the mould parts when in the closed configuration.

Advantageously, the apparatus may further comprise an interlocking device for engaging said gear mechanism for preventing rotation of said ball screw.

To help clean the moulds there may also be an integrated mould brushing unit which has transversely rotating brushes for travelling over the mould faces to remove debris.

The present invention also provides an integrated circuit encapsulation apparatus, comprising a moulding apparatus as above, adapted to receive a mould defining a cavity adapted to receive an integrated circuit die and an attached leadframe for encapsulation thereof.

According to a second aspect of the present invention, there is provided a method of closing and clamping a mould press comprising a frame, two platens having a mould arranged therebetween, a motor and gear mechanism mounted on a first one of said platens, a ball screw, a pneumatic cylinder on said frame, a lever arm, and a ball nut mounted on said ball screw, said method comprising the steps of:
rotating said ball screw, using said motor and gear mechanism, to drive said ball screw axially, thereby to move the first platen towards the second platen; and
driving said ball nut, using said pneumatic cylinder and lever arm, to apply a clamping force through said ball screw to said first platen.

A particular embodiment of the method of claim 8 is the subject of dependent claim 9.

The invention is described in greater detail below by way of example only, with reference to the accompanying drawings in which:
Figures 1A, 1B and 1C show cross-sections through an exemplary moulding press illustrating the operation for encapsulating an integrated circuit and leadframe;
Figures 2A and 2B show a plan and elevation view respectively of an electro pneumatic press;
Figures 3A and 3B show an elevation and side elevation respectively of the mold brushing system; and
Figures 4A and 4B show the spring-loaded system for removing the mold.

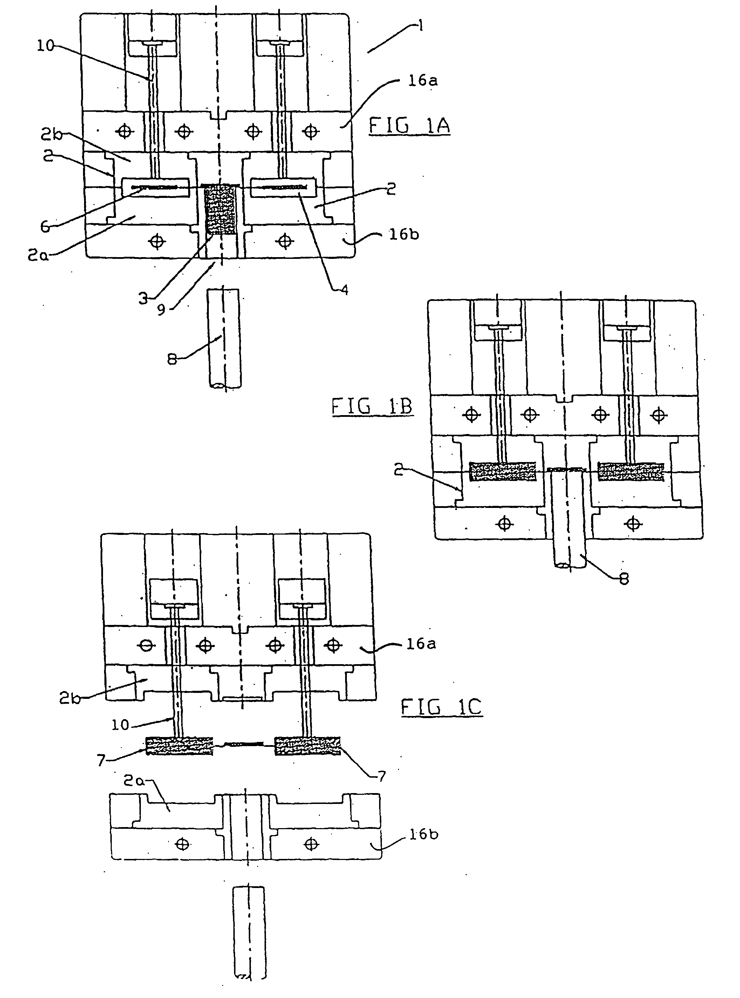

Figures 1A, 1B and 1C arc cross-sectional views of an exemplary transfer molding press 1 adapted to receive two molds 2. Each mold 2 is arranged within the molding press 1, and comprises upper and lower mold parts 2a, 2b which fit together to define a mold cavity 4.

The molding press 1 is shown in Figure 1A in a closed position, having been loaded with integrated circuit leadframes 6 within the respective mold cavities 4, and a pellet of encapsulating material 3 in a gangpot 9. Encapsulation of the integrated circuits 6 is achieved by heating the encapsulating material pellet 3 and pressing it within the gangpot using a transfer plunger 8, which causes the pellet 3 to liquefy and flow into the mold cavities 4 through small passages between the gangpot and the mold cavities (see Figure 1B). After allowing the encapsulating material to solidify again, the molding press 1 is opened (Figure 1C), wherein the mold parts 2a, 2b are separated. The encapsulated integrated circuits 7 are lifted from the mold cavity by way of ejector pins 10, so as to expose them for removal from. the molding press. After removal of the encapsulated integrated circuits 7, the open molding press is ready to receive new leadframe inserts 6 and encapsulating material pellet 3 to repeat the encapsulating process.

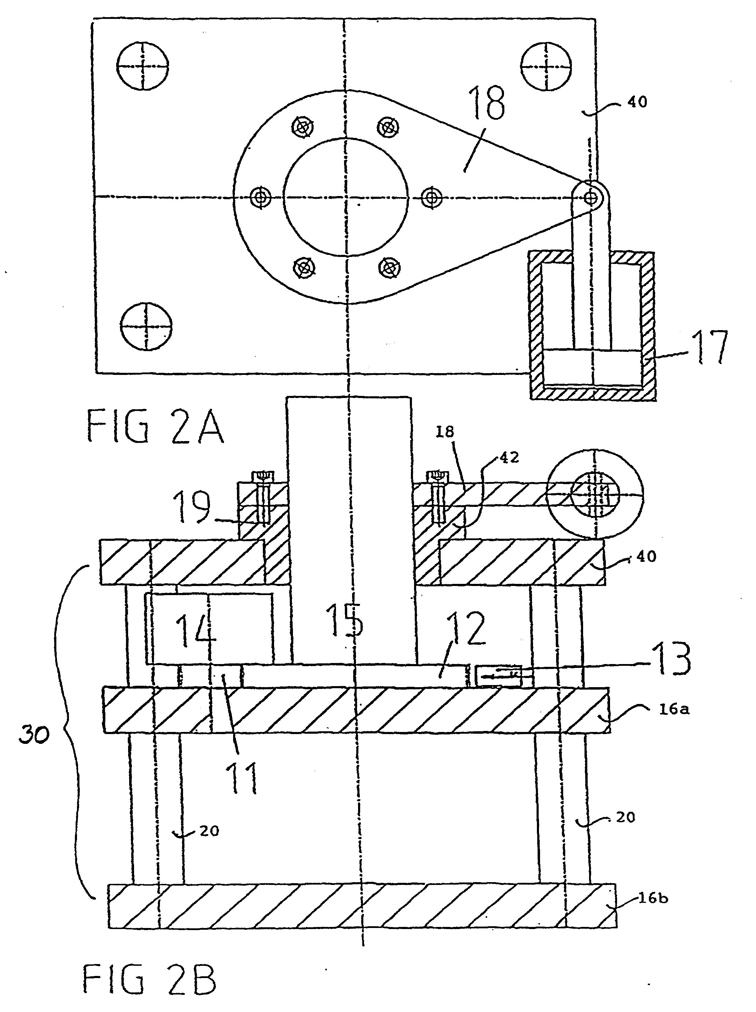

Referring to Figures 2A and 2B, the mould parts 2a, 2b are mounted between first and second platens 16a,16b. The first platen 16a is capable of motion within a frame 30, towards and away from the second platen 16b, along elongate posts 20. A ball-screw 15 is mounted on a large gear 12, which is driven by a smaller gear 11 mounted on a server motor 14, on the first platen 16a. This causes the ball screw 15 and platen 16a to move up or down.

To close and clamp the mould, an interlocking device 13 engages the large gear 12. A pneumatic cylinder 17, on the frame, applies torque to a ball-screw nut 19 by a lever arm 18. The ball nut 19 is sited in a hole in a top frame plate 40. A flange 42 of the ball nut 19 sits above the frame plate 40. The ball screw 15 passes through the lever arm 18 and ball nut 19. Rotation of the ball nut 19, with the interlocking gear 13 engaging the large gear 12, pushes the ball screw 15 downwards, which applies the clamping force. To open the mold, the process is reversed.

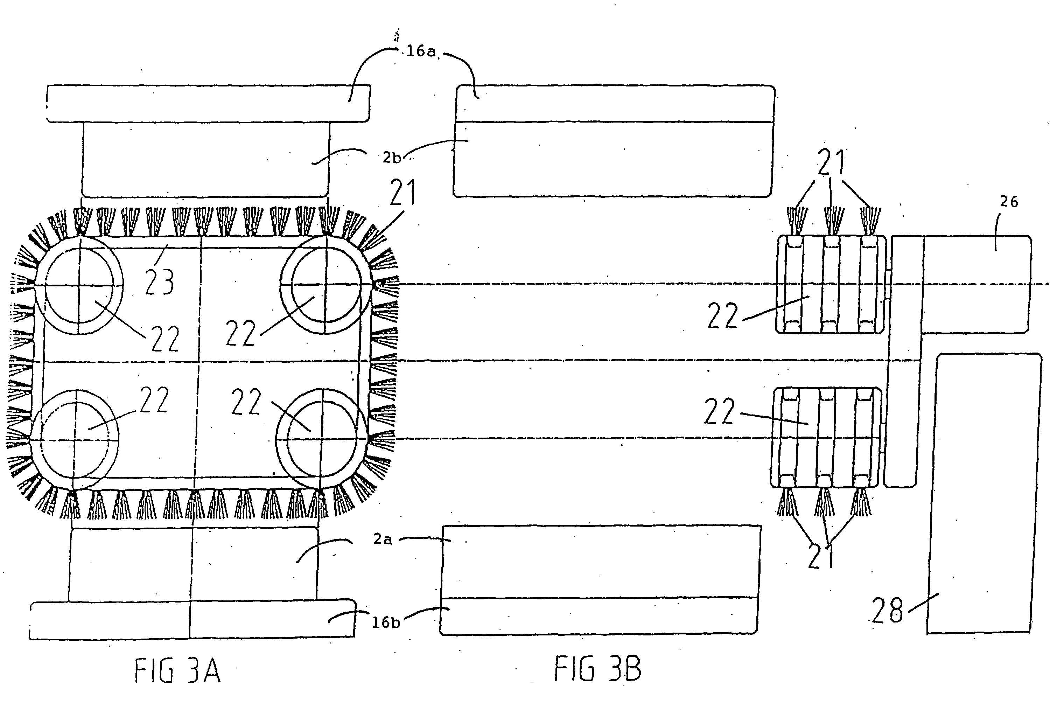

In Figure 3A, beat resistant brushes 21 are mounted on V-belts 23 which run on pulleys 22. A motor 28 drives the pulleys 22 through a drive mechanism 26. When the mold is opened, the brushing unit translates in a forward direction across the mold-face and then reverses brushing any debris away from the mold. The rotation of the brushes about a horizontal axis as the translation occurs provides a more effective cleaning action than that of known cleaning methods which have brushes rotating about vertical axes.

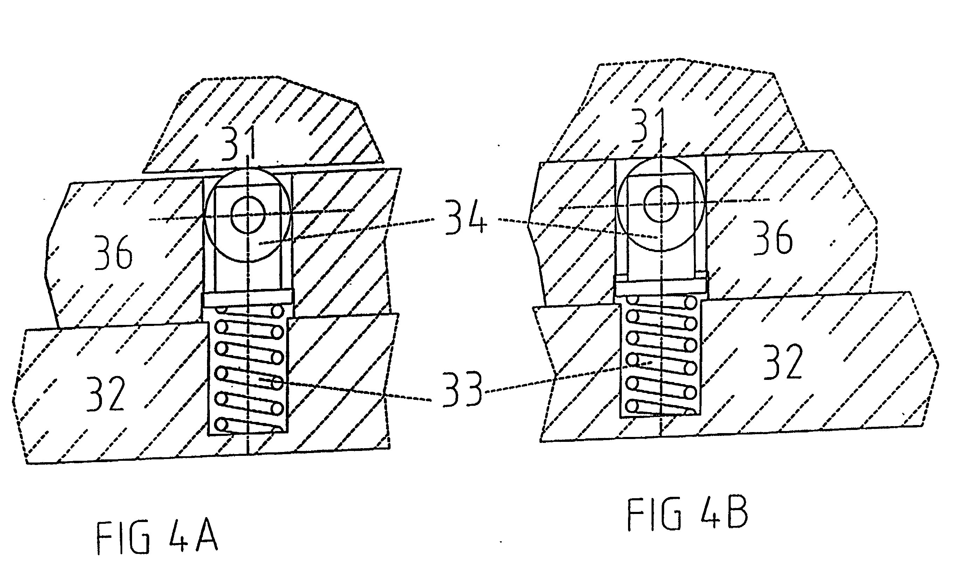

In Figures 4A and 4B, a roller-bearing system 34 is mounted in the press-table 36 and is loaded with a spring 33 set in the base plate 32. When the mold 31 is loaded, it depresses the spring 33 and sits in contact with the press table 36. When the press is released, the spring 33 uncoils and raises the mold above the press table 36 allowing easy removal. The temperature of the mold which can be as high as 180°C makes mold changing a difficult operation and this system increases the speed of changing considerably.

The above detailed description is by way of example only, and is not intended to limit the scope of the invention which is defined in the following claims.

## Claims

1. An injection moulding apparatus comprising a moulding press adapted to receive a mould (31) having a cavity shaped for the formation of a moulding product, the moulding apparatus comprising:
a frame (30); and
a first platen (16a) movable relative to a second platen (16b) so as to allow respective mould parts (2a, 2b) arranged therebetween to be moved between open and closed configurations; **characterised by** further comprising:
a ball screw (15);
a motor (14) coupled to drive the ball screw (15) by way of a gear mechanism (11, 12) for moving the first platen (16a) relative to the second platen (16b) and said frame (30); and
a pneumatic cylinder (17) for driving a lever arm (18) to rotate a ball nut (19) on said ball screw (15) to apply a clamping force through said ball screw (15) to said first platen (16a).

2. Moulding apparatus according to claim 1, wherein:
said ball screw (15) is coupled to said first platen (16a);
said motor (14) is mounted on said first platen (16a); and
said cylinder (17) is on said frame (30).

3. Moulding apparatus according to claim 1 or 2, further comprising a spring-loaded bearing system (33,34) in said mould (31) for easy removal of the mould (31) from the platen (16a).

4. Moulding apparatus as claimed in claim 1, 2 or 3, wherein the pneumatic cylinder (17) is arranged to apply torque to said lever arm (18) and said ball nut (19) so as to apply said clamping force between the mould parts (2a, 2b) thereby to close and clamp the mould.

5. Moulding apparatus according to any one of the preceding claims, further comprising an interlocking device (13) for engaging said gear mechanism (11, 12) for preventing rotation of said ball screw (15).

6. Moulding apparatus as claimed in any one of the preceding claims, further comprising an integrated mould brushing unit (21-23) which has transversely rotating brushes (22) for travelling over the mould faces to remove debris.

7. An integrated circuit encapsulation apparatus, comprising moulding apparatus (1) according to any one of the preceding claims, arranged to receive a mould defining a cavity adapted to receive an integrated circuit die and an attached leadframe (6) for encapsulation thereof.

8. A method of closing and clamping a mould press comprising a frame (30), two platens (16a, 16b) having a mould (31) arranged therebetween, a motor (14) and gear mechanism (11, 12), a ball screw (15), a pneumatic cylinder (17), a lever arm (18), and a ball nut (19) mounted on said ball screw (15), said method comprising the steps of:
rotating said ball screw (15), using said motor (14) and gear mechanism (11, 12), to drive said ball screw (15) axially, thereby to move the first platen (16a) towards the second platen (16b); and
driving said ball nut (19), using said pneumatic cylinder (17) and lever arm (18), to apply a clamping force, through said ball screw (15) to said first platen (16a).

9. A method according to claim 8, further comprising the step, between said rotating and driving steps, of preventing rotation of said ball screw (15), using an interlocking device (13).

## Patentansprüche

1. Spritzgießvorrichtung enthaltend eine Formpresse, geeignet zur Aufnahme einer Form (31) mit einem zur Bildung eines Formerzeugnisses ausgestalteten Hohlraum, wobei die Formvorrichtung enthält:
einen Rahmen (30); und
eine erste Platte (16a), die relativ zu einer zweiten Platte (16b) bewegbar ist, um es entsprechenden Formteilen (2a, 2b), die dazwischen angeordnet sind, zu ermöglichen, zwischen einer offenen und einer geschlossenen Konfiguration bewegt zu werden; **gekennzeichnet durch**
eine Kugelumlaufspindel (15);
einen Motor (14), der mittels eines Getriebes (11, 14) zum Betätigen der Kugelumlaufspindel (15) gekoppelt ist, um die erste Platte (16a) relativ zur zweiten Platte (16b) und zum Rahmen (30) zu bewegen; und
einen pneumatischen Zylinder (17) zum Antreiben eines Hebelarmes (18) um eine Kugelmutter (19) auf der Kugelumlaufspindel (15) zu drehen, um über die Kugelumlaufspindel (15) auf die erste Platte (16a) eine Klemmkraft aufzubringen.

2. Formvorrichtung nach Anspruch 1, wobei:
die Kugelumlaufspindel (15) mit der ersten Platte (16a) gekoppelt ist;
der Motor (14) an der ersten Platte (16a) angebracht ist; und
der Zylinder (17) sich am Rahmen (30) befindet.

3. Formvorrichtung nach Anspruch 1 oder 2, ferner enthaltend ein federbelastetes Lagersystem (33, 34) in der Form (31) zur leichten Entnahme der Form (31) aus der Platte (16a).

4. Formvorrichtung nach einem der Ansprüche 1, 2 oder 3, bei der der pneumatische Zylinder (17) so angeordnet ist, daß er auf den Hebelarm (18) und die Kugelmutter (19) ein Drehmoment aufbringt, um die Klemmkraft zwischen den Formteilen (2a, 2b) auszuüben und hierdurch die Form zu schließen und festzuklemmen.

5. Formvorrichtung nach einem der vorhergehenden Ansprüche, ferner enthaltend eine Verriegelungsvorrichtung (13), für den Eingriff in den Getriebemechanismus (11, 12) zur Verhinderung einer Drehung der Kugelumlaufspindel (15).

6. Formvorrichtung nach einem der vorhergehenden Ansprüche, ferner enthaltend eine integrierte Formbürsteneinheit (21-23), die quer rotierende Bürsten (22) zum Bürsten über die Formoberflächen enthält, zur Entfernung von Staub.

7. Einkapselungsvorrichtung für eine integrierte Schaltung, enthaltend eine Formvorrichtung (1) nach einem der vorhergehenden Ansprüche, die zur Aufnahme einer Form für eine integrierte Schaltung geeignet ist und einen zugehörigen Führungsrahmen (6) zum Einkapseln derselben .

8. Verfahren zum Schließen und Festklemmen einer Formpresse, enthaltend einen Rahmen (30), zwei Platten (16a, 16b) mit einer Form (31), die dazwischen angeordnet ist, einen Motor (14) und einen Getriebemechanismus (11, 12), eine Kugelumlaufspindel (15), einen pneumatischen Zylinder (17), einen Hebelarm (18), und eine Kugelmutter (19), die auf der Kugelumlaufspindel (15) angeordnet ist, wobei das Verfahren die folgenden Schritte umfaßt:
Drehen der Kugelumlaufspindel (15) unter Verwendung des Motors (14) und des Getriebemechanismus (11, 12), um die Kugelumlaufspindel (15) axial anzutreiben und hierdurch die erste Platte (16a) in Richtung der zweiten Platte (16b) zu bewegen; und
Antreiben der Kugelmutter (19) untere Verwendung des pneumatischen Zylinders (17) und des Hebelarms (18), um über die Kugelumlaufspindel (15) auf die erste Platte (16a) eine Klemmkraft auszuüben.

9. Verfahren nach Anspruch 8, ferner enthaltend den Schritt zur Verhinderung einer Rotation der Kugelumlaufspindel (15) zwischen dem Drehschritt und dem Antriebsschritt unter Verwendung einer Verriegelungsvorrichtung (13) .

## Revendications

1. Dispositif de moulage par injection comprenant une presse de moulage adaptée pour recevoir un moule (31) comportant une cavité formée pour la formation d'un produit de moulage, le dispositif de moulage comprenant :
un bâti (30) ; et
un premier plateau (16a) mobile par rapport à un deuxième plateau (16b) de façon à permettre à des parties de moule respectives (2a, 2b) agencées entre ceux-ci d'être déplacées entre des configurations ouverte et fermée ; **caractérisé par le fait qu'**il comprend de plus :
une vis à billes (15) ;
un moteur (14) couplé pour entraîner la vis à billes (15) à l'aide d'un mécanisme d'engrenages (11, 12) pour déplacer le premier plateau (16a) par rapport au deuxième plateau (16b) et audit bâti (30) ; et
un cylindre pneumatique (17) pour actionner un bras de levier (18) pour faire tourner un écrou sphérique sur ladite vis à billes (19) pour appliquer une force de serrage par l'intermédiaire de ladite vis à billes (15) audit premier plateau (16a).

2. Dispositif de moulage selon la revendication 1, dans lequel :
ladite vis à billes (15) est couplée audit premier plateau (16a) ;
ledit moteur (14) est monté sur ledit premier plateau (16a) ; et
ledit cylindre (17) se trouve sur ledit bâti (30).

3. Dispositif de moulage selon la revendication 1 ou 2, comprenant de plus un système de support chargé par un ressort (33, 34) dans ledit moule (31) pour le retrait facile du moule (31) depuis le plateau (16a).

4. Dispositif de moulage selon la revendication 1, 2 ou 3, dans lequel le cylindre pneumatique (17) est configuré de façon à appliquer un couple audit bras de levier (18) et audit écrou sphérique (19) de façon à appliquer ladite force de serrage entre les parties de moule (2a, 2b), de façon à fermer et à serrer par conséquent le moule.

5. Dispositif de moulage selon l'une quelconque des revendications précédentes, comprenant de plus un dispositif de verrouillage (13) pour s'engrener avec ledit mécanisme d'engrenages (11, 12) pour empêcher la rotation de ladite vis à billes (15).

6. Dispositif de moulage selon l'une quelconque des revendications précédentes, comprenant de plus une unité de brossage de moule intégrée (21 à 23) qui comporte des brosses tournant transversalement (22) pour se déplacer sur les faces de moule afin de retirer des débris.

7. Dispositif d'encapsulage de circuit intégré comprenant un dispositif de moulage (1) selon l'une quelconque des revendications précédentes, configuré de façon à recevoir un moule définissant une cavité adaptée pour recevoir une pastille de circuit intégré et une grille de connexion qui est fixée (6) pour l'encapsulage de ceux-ci.

8. Procédé pour fermer et serrer une presse de moule comprenant un bâti (30), deux plateaux (16a, 16b) comportant un moule (31) disposé entre eux, un moteur (14) et un mécanisme d'engrenages (11, 12), une vis à billes (15), un cylindre pneumatique (17), un bras de levier (18) et un écrou sphérique (19) monté sur ladite vis à billes (15), ledit procédé comprenant les étapes suivantes :
la rotation de ladite vis à billes (15), à l'aide dudit moteur (14) et dudit mécanisme d'engrenages (11, 12), pour entraîner ladite vis à billes (15) axialement, de façon à déplacer par conséquent le premier plateau (16a) en direction du deuxième plateau (16b) ; et
l'entraînement dudit écrou sphérique (19), à l'aide dudit cylindre pneumatique (17) et dudit bras de levier (18), pour appliquer une force de serrage, par l'intermédiaire de ladite vis à billes (15), audit premier plateau (16a).

9. Procédé selon la revendication 8, comprenant de plus l'étape, entre lesdites étapes de rotation et d'entraînement, d'inhibition de la rotation de ladite vis à billes (15), à l'aide d'un dispositif de verrouillage (13).
